(19) Europäisches Patentamt / European Patent Office / Office européen des brevets

(11) **EP 3 745 511 A1**

(12) **EUROPEAN PATENT APPLICATION**
published in accordance with Art. 153(4) EPC

(43) Date of publication:
**02.12.2020 Bulletin 2020/49**

(51) Int Cl.:
*H01M 4/46* (2006.01)   *H01M 4/38* (2006.01)
*H01M 10/0566* (2010.01)

(21) Application number: **18902098.5**

(22) Date of filing: **22.11.2018**

(86) International application number:
**PCT/JP2018/043160**

(87) International publication number:
**WO 2019/146231 (01.08.2019 Gazette 2019/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.01.2018 JP 2018009676**

(71) Applicant: **SUMITOMO CHEMICAL COMPANY LIMITED**
**Chuo-ku**
**Tokyo 104-8260 (JP)**

(72) Inventors:
• **YAMAGUCHI Takitaro**
  **Tsukuba-shi, Ibaraki 300-3294 (JP)**
• **HOSHIKAWA Hiroaki**
  **Niihama-shi, Ehime 792-8521 (JP)**

(74) Representative: **Vossius & Partner**
**Patentanwälte Rechtsanwälte mbB**
**Siebertstrasse 3**
**81675 München (DE)**

(54) **NEGATIVE ELECTRODE ACTIVE MATERIAL FOR NON-AQUEOUS ELECTROLYTE SECONDARY BATTERY, NEGATIVE ELECTRODE, AND BATTERY**

(57)    Anode active material for a non-aqueous electrolyte secondary battery includes high-purity aluminum having a purity of 99.9 mass% or more or an alloy thereof, in which a Vickers hardness is 35 HV or less.

EP 3 745 511 A1

**Description**

[Technical Field]

The present invention relates to anode active material for a non-aqueous electrolyte secondary battery, an anode, and a battery.

Priority is claimed on Japanese Patent Application No. 2018-009676, filed January 24, 2018, the content of which is incorporated herein by reference.

[Background Art]

A non-aqueous electrolyte secondary battery is being developed as a secondary battery having a high energy density. Rechargeable secondary batteries have already been in practical use not only for small power sources in mobile phone applications, notebook personal computer applications, and the like but also for medium-sized and large-sized power sources in automotive applications, power storage applications, and the like.

For example, Patent Literature 1 describes a lithium secondary battery using a lithium-aluminum alloy as anode active material, which uses aluminum having a Vickers hardness of 40 HV or more and 65 HV or less.

Patent Literature 2 describes an organic electrolyte secondary battery in which an aluminum-manganese alloy having a Vickers hardness of 70 HV or more is used as anode active material.

As described above, aluminum, which has a larger discharge capacity than graphite, has been variously studied as anode active material.

[Citation List]

[Patent Literature]

[Patent Literature 1]
Japanese Unexamined Patent Application, First Publication No. Hei 7-320723
[Patent Literature 2]
Japanese Unexamined Patent Application, First Publication No. Hei 9-320634

[Summary of Invention]

[Technical Problem]

There is still room for improvement in anode active material for a non-aqueous electrolyte secondary battery in order to improve battery characteristics such as a discharge capacity retention ratio.

The present invention has been made in view of the above circumstances, and an object thereof is to provide anode active material for a non-aqueous electrolyte secondary battery having a high discharge capacity retention ratio, an anode using the same, and a battery using the same.

[Solution to Problem]

The present invention includes the following [1] to [11].

[1] Anode active material for a non-aqueous electrolyte secondary battery, the anode active material including: high-purity aluminum having a purity of 99.9 mass% or more or an alloy thereof, in which a Vickers hardness is 35 HV or less.

[2] Anode active material for a non-aqueous electrolyte secondary battery according to [1], in which a total content of iron and copper contained in the high-purity aluminum is 300 mass ppm or less with respect to a total mass of the high-purity aluminum.

[3] Anode active material for a non-aqueous electrolyte secondary battery according to [1] or [2], further including: 0.1 mass% or more and 1.5 mass% or less of an alkaline earth metal with respect to a total amount of the aluminum alloy.

[4] Anode active material for a non-aqueous electrolyte secondary battery according to [3], in which the alkaline earth metal is one or more alkaline earth metals selected from the group consisting of calcium, strontium, barium, and radium.

[5] Anode active material for a non-aqueous electrolyte secondary battery according to [3] or [4], in which a total content of a metal component excluding the high-purity aluminum and the alkaline earth metal is 0.1 mass% or less with respect to the total amount of the aluminum alloy.

[6] Anode active material for a non-aqueous electrolyte secondary battery according to any one of [1] to [5], in which the high-purity aluminum is a high-purity aluminum foil, and the aluminum alloy is an aluminum alloy foil.

[7] Anode active material for a non-aqueous electrolyte secondary battery according to [6], in which the high-purity aluminum foil or the aluminum alloy foil has a thickness of 5 $\mu$m or more and 200 $\mu$m or less.

[8] Anode active material for a non-aqueous electrolyte secondary battery according to any one of [1] to [5], in which the high-purity aluminum or the aluminum alloy is a powder having an average particle size of 1 $\mu$m or more and 20 $\mu$m or less.

[9] Anode active material for a non-aqueous electrolyte secondary battery according to any one of [1] to [5], in which the high-purity aluminum or the aluminum alloy is a non-woven fabric made of aluminum fibers.

[10] An anode comprising: anode active material for a non-aqueous electrolyte secondary battery according to any one of [1] to [9].

[11] A battery comprising: anode according to [10].

[Advantageous Effects of Invention]

According to the present invention, it is possible to provide anode active material for a non-aqueous electrolyte secondary battery having a high discharge capacity retention ratio, an anode using the same, and a battery using the same. The battery obtained by the present invention tends to have a high cycle capacity retention ratio.

[Brief Description of Drawings]

Fig. 1A is a schematic configuration view illustrating an example of a lithium-ion secondary battery.
Fig. 1B is a schematic configuration view illustrating an example of the lithium-ion secondary battery.
Fig. 2 is a graph showing the results of a cycle test.
Fig. 3 is a schematic configuration view illustrating an example of a lithium-ion secondary battery.

[Description of Embodiments]

<Anode active Material for Non-Aqueous Electrolyte Secondary Battery>

The present embodiment relates to anode active material for a non-aqueous electrolyte secondary battery (hereinafter, sometimes referred to as "anode active material"), which is made of high-purity aluminum having a purity of 99.9 mass% or more or an alloy thereof and has a Vickers hardness of 35 HV or less.

The anode active material of the present embodiment is a flexible material having a Vickers hardness as small as 35 HV or less. It is presumed that the flexible anode active material can relax the strain when occluding lithium and maintain the crystal structure. Therefore, it is considered that the discharge capacity retention ratio of a battery using the anode active material of the present embodiment can be increased. In the present specification, the "discharge capacity retention ratio" means the capacity ratio of the discharge capacity at the time of re-measurement to the initial discharge capacity.

The anode active material of the present embodiment has a Vickers hardness of 35 HV or less, preferably 33 HV or less, more preferably 30 HV or less, and particularly preferably 25 HV or less. The lower limit of the Vickers hardness is not particularly limited, but examples thereof include 10 HV, 12 HV, and 14 HV.

Therefore, the Vickers hardness of the anode active material of the present embodiment may be, for example, 10 HV or more and 35 HV or less, 12 HV or more and 33 HV or less, and 14 HV or more and 30 HV or less.

It is presumed that the flexible anode active material having a Vickers hardness of not more than the above upper limit can relax the strain of the crystal structure when occluding lithium and can maintain the crystal structure. Therefore, the discharge capacity retention ratio of the battery using the anode active material of the present embodiment can be increased.

As the Vickers hardness, a value measured by the following method is used.

[Measurement Method]

For the high-purity aluminum or aluminum alloy, Vickers hardness (HV) is measured using a micro Vickers hardness tester as an index of hardness.

The Vickers hardness is a value measured according to JIS Z 2244:2009 "Vickers hardness test - Test method". The Vickers hardness is measured by pressing a square-based pyramid diamond indenter into the surface of a test piece as the high-purity aluminum or aluminum alloy, releasing the test force, and then calculating the diagonal length of the indentation left on the surface.

In the above standards, the hardness symbol is set to be changed by the test force. In the present embodiment, for example, the micro Vickers hardness scale HV 0.05 at a test force of 0.05 kgf (= 0.4903 N) is applied.

The test load may be adjusted arbitrarily. For example, as described in JIS Z 2244:2009, the test piece thickness and the test load may be selected so that the test piece thickness is 1.5 or more times the diagonal length of the indentation. Suitable examples of the test load include 0.05 kgf in a case where the thickness of the high-purity aluminum or the alloy is 300 $\mu$m or more, and 0.005 to 0.01 kgf in a case where the thickness is less than 300 $\mu$m. The test load may be set so that the size of the indentation is adjusted by the hardness of the test piece.

In a case where the anode active material of the present embodiment is a powder, the Vickers hardness can be measured by embedding the powder in a resin and preparing a test piece having a polished test surface.

In a case where the anode active material of the present embodiment is a non-woven fabric, for example, the Vickers hardness can be measured by preparing a test piece having a polished test surface to which tension with a strength that does not cause looseness in the non-woven fabric is applied.

In a case where the anode active material is the powder or non-woven fabric, the test load for the Vickers hardness measurement may be, for example, 0.005 to 0.01 kgf.

The anode active material of the present embodiment is made of high-purity aluminum having a purity of 99.9 mass% or more or an alloy thereof.

· High-purity aluminum

The high-purity aluminum used in the present embodiment has a purity of 99.9 mass% or more, preferably more than 99.9 mass%, more preferably 99.95 mass% or more, particularly preferably 99.99 mass% or more, and more particularly preferably 99.995 mass% or more. The high-purity aluminum may have a purity of 99.99999 mass% or more.

In the present embodiment, the purity of the high-purity aluminum can be measured by using an optical emission spectrometer or glow discharge mass spectrometry (GD-MS).

Examples of a method of refining the high-purity aluminum include a unidirectional segregation process and a three-layer electrolysis process.

The segregation method is a purification method utilizing the segregation phenomenon during solidification of molten aluminum, and a plurality of methods have been put into practical use. As one form of the segregation method, there is a method of pouring molten aluminum into a container, and allowing refined aluminum to solidify from the bottom portion while heating and stirring the molten aluminum at the upper portion. By the segregation method, high-purity aluminum having a purity of 99.99 mass% or more can be obtained.

As one form of the three-layer electrolytic method, first, aluminum or the like having a relatively low purity (for example, a grade of a purity of 99.9 mass% or less in JIS-H2102) is put into an Al-Cu alloy layer. Thereafter, in the method, with an anode in a molten state, an electrolytic bath containing, for example, aluminum fluoride and barium fluoride is disposed thereon, and high-purity aluminum is deposited on a cathode.

High-purity aluminum having a purity of 99.999 mass% or more can be obtained by the three-layer electrolytic method.

The method of manufacturing high-purity aluminum is not limited to the segregation method and the three-layer electrolytic method, and other known methods such as the zone melting refining method and the ultra-high vacuum melting method may be used.

In the high-purity aluminum of the present embodiment, impurities such as manufacturing residues may be mixed. In this case, for example, the total content rate of iron and copper contained in the high-purity aluminum is preferably 300 mass ppm or less, more preferably 100 mass ppm or less, and even more preferably 50 mass ppm or less, with respect to the total mass of high-purity aluminum. The total content rate of iron and copper contained in the high-purity aluminum may be 0 mass ppm with respect to the total mass of the high-purity aluminum. Here, the "impurities" mean components other than aluminum and an alkaline earth metal.

When the total amount of iron and copper is less than or equal to the above upper limit, the purity of aluminum increases and the Vickers hardness can be controlled within the range of the present invention. In the present embodiment, the amount of impurities with respect to the total mass of the high-purity aluminum or the aluminum alloy can be measured using an optical emission spectrometer.

· Aluminum alloy

In the present embodiment, the anode active material may be an alloy of the high-purity aluminum. A metal to be alloyed is preferably an alkaline earth metal, and preferably one or more alkaline earth metals selected from the group consisting of calcium, strontium, barium, and radium. In the present embodiment, barium is more preferable.

In a case where an alloy of the high-purity aluminum and the alkaline earth metal is used, the amount of the alkaline earth metal contained in the aluminum alloy is preferably 0.1 mass% or more alloy, more preferably 0.5 mass% or more, and even more preferably 0.7 mass% or more with respect to the total mass of the aluminum alloy.

In addition, the amount of the alkaline earth metal contained in the aluminum alloy is preferably 1.5 mass% or less, more preferably 1.4 mass% or less, and even more preferably 1.3 mass% or less with respect to the total amount of the aluminum alloy.

The upper limit and the lower limit thereof can be arbitrarily combined. In the present embodiment, the amount of the alkaline earth metal contained in the aluminum alloy is preferably 0.1 mass% or more and 1.5 mass% or less with respect to the total amount of the aluminum alloy.

When the amount of the alkaline earth metal is not more than the above upper limit and the amount of the alkaline earth metal is low, the Vickers hardness can be controlled within the range of the present invention.

In the aluminum alloy, the total content rate of metal components excluding aluminum and the alkaline earth metal is preferably 0.1 mass% or less, more preferably 0.05 mass% or less, and even more preferably 0.01 mass% with respect to the total amount of the aluminum alloy. The total amount of metal components may also be 0 mass% (below the lower limit of detection).

In the present embodiment, the amounts of aluminum and one or more alkaline earth metals selected from the group consisting of calcium, strontium, barium, and radium in the aluminum alloy and the amounts of the metal components excluding the aluminum and alkaline earth metals can be measured using an optical emission spectrometer.

In the present embodiment, the high-purity aluminum is preferably a high-purity aluminum foil. In addition, the aluminum alloy is preferably an aluminum alloy foil.

· Method of manufacturing high-purity aluminum or aluminum alloy (casting step)

The above-mentioned high-purity aluminum can be cast or cut to obtain an aluminum ingot having a shape suitable for rolling.

In a case where casting is performed, for example, a treatment of melting the high-purity aluminum at about 680°C or higher and 800°C or lower to remove gas and non-metallic inclusions for cleaning (for example, vacuum treatment of molten alloy) is performed.

The vacuum treatment is performed, for example, at 700°C or higher and 800°C or lower for 1 hour or longer and 10 hours or shorter under the condition of a degree of vacuum of 0.1 Pa or more and 100 Pa or less.

As a treatment for cleaning the alloy, a treatment of blowing a flux, an inert gas or chlorine gas can also be used. The molten alloy cleaned by the vacuum treatment or the like is usually cast in a mold to obtain an ingot.

As the mold, one made of iron or graphite heated to 50°C or higher and 200°C or lower is used. The high-purity aluminum of the present embodiment is cast by a method of pouring a molten alloy of 680°C or higher and 800°C or lower. Alternatively, an ingot can also be obtained by semi-continuous casting which is generally used.

A high-purity aluminum alloy can be obtained by adding a predetermined amount of a metal element such as an alkaline earth metal at the time of melting in the above casting step.

(Rolling Step)

The obtained ingot of aluminum can be directly cut and used as a battery member. If the ingot is rolled, extruded, or forged into a plate material or a mold material, the ingot can be easily used as a member.

In the rolling step of the ingot, for example, hot rolling and cold rolling are performed to process the ingot into a plate material. The hot rolling is repeatedly performed, for example, at a temperature of 350°C or higher and 500°C or lower under the condition of a one-pass working ratio of 2% or more and 30% or less until the aluminum ingot has a desired thickness.

After the hot rolling, an intermediate annealing treatment is usually performed before the cold rolling. In the intermediate annealing treatment, for example, the hot-rolled plate material may be heated to 350°C or higher and 500°C or lower and allowed to cool immediately after the temperature rise, or allowed to cool after being held for about 1 hour or longer and 5 hours or shorter. By this treatment, the material is softened and a state suitable for cold rolling is obtained.

The cold rolling is repeatedly performed, for example, at a temperature lower than the recrystallization temperature of aluminum, usually from room temperature to 80°C or lower, under the condition of a one-pass working ratio of 1% or more and 20% or less, until the aluminum ingot has a desired thickness. A final heat treatment can be performed after the cold rolling. The final heat treatment is usually performed in the air, but may be performed in a nitrogen atmosphere or a vacuum atmosphere. In addition to softening of the work-hardened plate material by the final heat treatment, there are cases where various physical properties are adjusted by controlling the crystal structure. The Vickers hardness can be controlled within the range of the present invention by selecting the intermediate annealing treatment, the final heat treatment, and the processing method.

In the present embodiment, the "high-purity aluminum foil" or the "aluminum alloy foil" is obtained by thinly rolling the high-purity aluminum or the aluminum alloy into a thickness of about 200 $\mu$m or less.

In the present embodiment, the thickness of the high-purity aluminum foil or the aluminum alloy foil is preferably 5 $\mu$m or more, more preferably 6 $\mu$m or more, and even more preferably 7 $\mu$m or more. In addition, the thickness is preferably 200 $\mu$m or less, more preferably 190 $\mu$m or less, and even more preferably 180 $\mu$m or less. The upper limit and the lower limit thereof can be arbitrarily combined. In the present embodiment, the thickness is preferably 5 $\mu$m or more and 200 $\mu$m or less.

In the present embodiment, the thickness of the high-purity aluminum foil or the aluminum alloy foil may be measured using a thickness gauge or a caliper.

In the present embodiment, the high-purity aluminum or the aluminum alloy may be a powder having an average particle size of 1 $\mu$m or more and 20 $\mu$m or less. This can be obtained from the ingot obtained by the above casting step. The method is not particularly limited, and examples thereof include a method using a ball mill, a bead mill, or the like and a method using a jet mill or the like.

A method of manufacturing the powder is not particularly limited, and for example, the powder can be manufactured by an atomizing method in which molten aluminum is ejected from a nozzle.

In the present embodiment, regarding the average particle size of the powder, for example, observation is performed by a scanning electron microscope (SEM), and from the obtained SEM photograph, the distance (unidirectional particle diameter) between parallel lines sandwiched between the parallel lines drawn on a projected image of the powder in a certain direction is measured as the particle size of the powder. At this time, 50 particles are measured, and the arithmetic average value of the particle sizes of the obtained powder is taken as the average particle size of the powder.

In the present embodiment, the high-purity aluminum or the aluminum alloy may be a non-woven fabric made of aluminum fibers. The non-woven fabric made of aluminum is obtained by adopting a method of obtaining aluminum fibers by the "melt spinning method" in which molten high-purity aluminum is pressurized and ejected from a nozzle to rapidly cool and solidify to manufacture fibers and then rolling the ejected cotton-like fibers with rolls.

Examples of the aluminum fibers include aluminum fibers having a diameter of 5 $\mu$m or more and 200 $\mu$m, aluminum short fibers, and the like.

< Anode and Battery>

Next, an anode using the anode active material of the present invention as the anode active material of a battery and a secondary battery having the anode will be described while describing the configuration of the battery.

Hereinafter, a lithium secondary battery using a lithium positive electrode(cathode) active material for the positive electrode will be described as an example.

An example of the lithium secondary battery of the present embodiment has a positive electrode and an anode, a separator sandwiched between the positive electrode and the anode, an electrolytic solution disposed between the positive electrode and the anode, and a battery can.

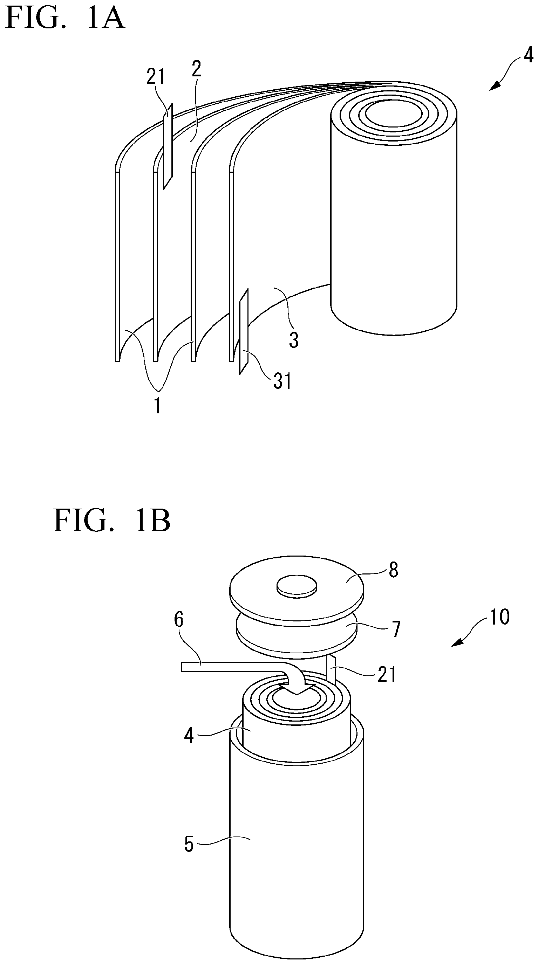

Figs. 1A and 1B are schematic views illustrating an example of the lithium secondary battery of the present embodiment. A cylindrical lithium secondary battery 10 of the present embodiment is manufactured as follows.

First, as illustrated in Fig. 1A, a pair of separators 1 having a strip shape, a strip-shaped positive electrode 2 having a positive electrode lead 21 at one end, and a strip-shaped anode 3 having an anode lead 31 at one end are stacked in order of the separator 1, the positive electrode 2, the separator 1, and the anode 3 and are wound to form an electrode group 4.

Next, as shown in Fig. 1B, the electrode group 4 and an insulator (not illustrated) are accommodated in a battery can 5, the can bottom is then sealed, the electrode group 4 is impregnated with an electrolytic solution 6, and an electrolyte is disposed between the positive electrode 2 and the anode 3. Furthermore, the upper portion of the battery can 5 is sealed with a top insulator 7 and a sealing body 8, whereby the lithium secondary battery 10 can be manufactured.

The shape of the electrode group 4 is, for example, a columnar shape such that the cross-sectional shape when the electrode group 4 is cut in a direction perpendicular to the winding axis is a circle, an ellipse, a rectangle, or a rectangle with rounded corners.

In addition, as a shape of the lithium secondary battery having the electrode group 4, a shape defined by IEC60086 which is a standard for a cell defined by the International Electrotechnical Commission (IEC), or by JIS C 8500 can be adopted. For example, shapes such as a cylindrical shape and a square shape can be adopted. For example, shapes such as a cylindrical shape and a square shape can be adopted.

Furthermore, the lithium secondary battery is not limited to the wound type configuration and may have a stacked type configuration in which a stacked structure of a positive electrode, a separator, an anode, and a separator is repeatedly stacked. The stacked type lithium secondary battery can be exemplified by a so-called coin type battery, a button type battery, and a paper type (or sheet type) battery.

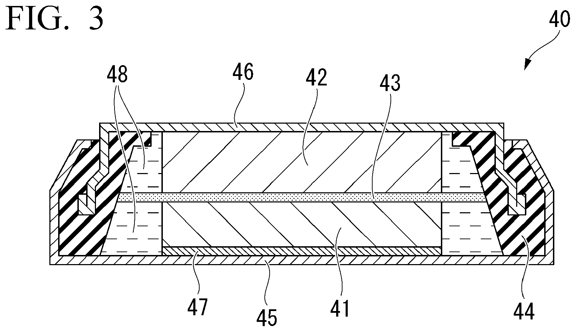

A cross-sectional view of an example of a coin battery 40 in Fig. 3 is illustrated. The coin battery 40 includes a positive electrode 41 capable of occluding and releasing lithium ions, an anode 42 having the anode active material for a non-aqueous electrolyte secondary battery of the present embodiment, a separator 43, a gasket 44, a positive electrode can 45, an anode can 46, a current collector 47, and an electrolytic solution 48.

In the coin battery 40, the anode can 46 having a cylindrical shape with a bottom is fixed to the positive electrode can 45 having a cylindrical shape with a bottom with the gasket 44 interposed therebetween. The separator 43 is disposed between the positive electrode 41 and the anode 42. The anode 42 used in the coin battery 40 illustrated in Fig. 3 is preferably an anode having the anode active material for a non-aqueous electrolyte secondary battery of the present embodiment in the form of a powder.

Hereinafter, each configuration will be described in order.

(Positive Electrode)

The positive electrode of the present embodiment can be manufactured by first adjusting a positive electrode mixture containing a positive electrode active material, a conductive material, and a binder and causing a positive electrode current collector to hold the positive electrode mixture.

(Positive Electrode Active Material)

As the positive electrode active material, a material containing a lithium-containing compound or another metal compound can be used. Examples of the lithium-containing compound include a lithium cobalt composite oxide having a layered structure, a lithium nickel composite oxide having a layered structure, and a lithium manganese composite oxide having a spinel structure.

Examples of the other metal compounds include oxides such as titanium oxide, vanadium oxide, and manganese dioxide, and sulfides such as titanium sulfide and molybdenum sulfide.

(Conductive Material)

A carbon material can be used as the conductive material included in the positive electrode of the present embodiment. As the carbon material, there are graphite powder, carbon black (for example, acetylene black), a fibrous carbon material, and the like. Carbon black is fine particles and has a large surface area. Therefore, the addition of a small amount of carbon black to the positive electrode mixture increases the conductivity inside the positive electrode and thus improves the charge and discharge efficiency and output characteristics. However, when the carbon black is added too much, both the binding force between the positive electrode mixture and the positive electrode current collector and the binding force inside the positive electrode mixture by the binder decrease, which causes an increase in internal resistance.

The proportion of the conductive material in the positive electrode mixture is preferably 5 parts by mass or more and 20 parts by mass or less with respect to 100 parts by mass of the positive electrode active material. In a case of using a fibrous carbon material such as graphitized carbon fiber or carbon nanotube as the conductive material, it is possible to reduce the proportion of the conductive material in the positive electrode mixture.

(Binder)

A thermoplastic resin can be used as the binder included in the positive electrode of the present embodiment. As the thermoplastic resin, fluorine resins such as polyvinylidene fluoride (hereinafter, sometimes referred to as PVdF), polytetrafluoroethylene (hereinafter, sometimes referred to as PTFE), tetrafluoroethylene-hexafluoropropylene-vinylidene fluoride copolymers, hexafluoropropylene-vinylidene fluoride copolymers, and tetrafluoroethylene-perfluorovinyl ether copolymers; and polyolefin resins such as polyethylene and polypropylene can be adopted.

These thermoplastic resins may be used as a mixture of two or more. By using a fluorine resin and a polyolefin resin as the binder and setting the ratio of the fluorine resin to the entire positive electrode mixture to 1 mass% or more and 10 mass% or less and the ratio of the polyolefin resin to 0.1 mass% or more and 2 mass% or less, a positive electrode mixture having both high adhesion to the positive electrode current collector and high bonding strength in the positive electrode mixture can be obtained.

(Positive Electrode Current Collector)

As the positive electrode current collector included in the positive electrode of the present embodiment, a strip-shaped member formed of a metal material such as Al, Ni, or stainless steel as the forming material can be used. Among these, as the current collector, from the viewpoint of easy processing and low cost, it is preferable to use Al as the forming material and process Al into a thin film.

As a method of causing the positive electrode current collector to hold the positive electrode mixture, a method of press-forming the positive electrode mixture on the positive electrode current collector can be adopted. In addition, the positive electrode mixture may be held by the positive electrode current collector by forming the positive electrode mixture into a paste using an organic solvent, applying the paste of the positive electrode mixture to at least one side of the positive electrode current collector, drying the paste, and pressing the paste to be fixed.

In a case of forming the positive electrode mixture into a paste, as the organic solvent which can be used, amine solvents such as N,N-dimethylaminopropylamine and diethylenetriamine; ether solvents such as tetrahydrofuran; ketone solvents such as methyl ethyl ketone; ester solvents such as methyl acetate; and amide solvents such as dimethylacetamide and N-methyl-2-pyrrolidone (hereinafter, sometimes referred to as NMP) can be adopted.

Examples of a method of applying the paste of the positive electrode mixture to the positive electrode current collector include a slit die coating method, a screen coating method, a curtain coating method, a knife coating method, a gravure coating method, and an electrostatic spraying method.

The positive electrode can be manufactured by the method mentioned above.

(Anode)

The anode included in the lithium secondary battery of the present embodiment only needs to include the anode active material of the present embodiment and may be formed only of the anode active material of the present embodiment.

(Anode Current Collector)

The anode of the present embodiment may include the anode active material of the present embodiment and an anode current collector.

As the anode current collector included in the anode of the present embodiment, a strip-shaped member formed of a metal material, such as Cu, Ni, and stainless steel, as the forming material can be adopted. Among these, as the material of the current collector, it is preferable to use Cu as the forming material and process Cu into a thin film because Cu is less likely to form an alloy with lithium and can be easily processed.

In a case where the anode active material is a powder, as a method of causing the anode current collector to hold an anode mixture, similarly to the case of the positive electrode, a method of press-forming an anode mixture containing the anode active material and a binder, or a method of forming the anode mixture into a paste using a solvent or the like, applying the paste onto the anode current collector, drying the paste, and pressing the paste to be compressed can be adopted.

A conductive material may further be added to the anode mixture. As the conductive material, those mentioned as the conductive material of the positive electrode material can be used.

In a case where the anode active material of the present embodiment is a high-purity aluminum foil or an aluminum alloy foil, the anode current collector may not be necessary.

(Separator)

As the separator included in the lithium secondary battery of the present embodiment, for example, a material having a form such as a porous film, non-woven fabric, or woven fabric made of a material such as a polyolefin resin such as polyethylene and polypropylene, a fluorine resin, and a nitrogen-containing aromatic polymer can be used. In addition, two or more of these materials may be used to form the separator, or these materials may be stacked to form the separator.

In the present embodiment, the air resistance of the separator according to the Gurley method defined by JIS P 8117 is preferably 50 sec/100 cc or more and 300 sec/100 cc or less, and more preferably 50 sec/100 cc or more and 200 sec/100 cc or less in order for the electrolyte to favorably permeate therethrough during battery use (during charging and discharging).

In addition, the porosity of the separator is preferably 30 vol% or more and 80 vol% or less, and more preferably 40 vol% or more and 70 vol% or less per unit volume. The separator may be a laminate of separators having different porosities.

(Electrolytic Solution)

The electrolytic solution included in the lithium secondary battery of the present embodiment is preferably a non-aqueous electrolytic solution containing an electrolyte and an organic solvent and containing substantially no water.

As the electrolyte contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, Li-BOB (here, BOB refers to bis(oxalato)borate), LiFSI (here, FSI refers to bis(fluorosulfonyl)imide), lower aliphatic carboxylic acid lithium salts, and $LiAlCl_4$ can be adopted, and a mixture of two or more of these may be used. Among these, as the electrolyte, it is preferable to use at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine.

As the organic solvent included in the electrolytic solution, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and $\gamma$-butyrolactone; nitriles such as acetonitrile and butyronitrile; amides such as N,N-dimethylformamide and N,N-dimethylacetamide; carbamates such as 3-methyl-2-oxazolidone; and sulfur-containing compounds such as sulfolane, dimethyl sulfoxide, and 1,3-propanesultone, or those obtained by introducing a fluoro group into these organic solvents (those in which one or more of the hydrogen atoms of the organic solvent are substituted with a fluorine atom) can be used.

As the organic solvent, it is preferable to use a mixture of two or more thereof. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution using such a mixed solvent has a wide operating temperature range, is less likely to deteriorate even when charged and discharged at a high current rate, and is less likely to deteriorate even during a long-term use.

Furthermore, as the electrolytic solution, it is preferable to use an electrolytic solution containing a lithium salt containing fluorine such as $LiPF_6$ and an organic solvent having a fluorine substituent in order to enhance the safety of the obtained lithium secondary battery. A mixed solvent containing ethers having a fluorine substituent, such as pentafluoropropyl methyl ether and 2,2,3,3-tetrafluoropropyl difluoromethyl ether, and dimethyl carbonate is even more preferable because the discharge capacity retention ratio is high even when charging or discharging is performed at a high current rate.

In the present embodiment, the amount of water in the non-aqueous electrolytic solution that contain substantially no water is preferably 50 mass ppm or less, and may be 0 mass ppm, with respect to the total amount of the non-aqueous electrolytic solution.

A solid electrolyte may be used instead of the electrolytic solution. As the solid electrolyte, for example, an organic polymer electrolyte such as a polyethylene oxide-based polymer compound, or a polymer compound containing at least one or more of a polyorganosiloxane chain or a polyoxyalkylene chain can be used. A so-called gel type in which a non-aqueous electrolytic solution is held in a polymer compound can also be used. Inorganic solid electrolytes containing sulfides such as $Li_2S-SiS_2$, $Li_2S-GeS_2$, $Li_2S-P_2S_5$, $Li_2S-B_2S_3$, $Li_2S-SiS_2-Li_3PO_4$, $Li_2S-SiS_2-Li_2SO_4$, and $Li_2S-GeS_2-P_2S_5$ can be adopted, and a mixture or two or more thereof may be used. By using these solid electrolytes, the safety of the lithium secondary battery may be further enhanced.

The amount of water in the solid electrolyte is preferably 50 mass ppm or less, and may be 0 mass ppm with respect to the total amount of the solid electrolyte.

In addition, in a case of using a solid electrolyte in the lithium secondary battery of the present embodiment, there may be cases where the solid electrolyte plays a role of the separator, and in such a case, the separator may not be required.

One aspect of the present invention is the use of the high-purity aluminum having a Vickers hardness of 35 HV or less and a purity of 99.9 mass% or more or an alloy thereof for the anode active material for a non-aqueous electrolyte secondary battery.

Another aspect of the present invention is the use of the high-purity aluminum having a Vickers hardness of 35 HV or less and a purity of 99.9 mass% or more or an alloy thereof for manufacturing of the anode active material for a non-aqueous electrolyte secondary battery.

[Examples]

Next, the present invention will be described in more detail with reference to examples.

<Vickers Hardness>

Vickers hardness (HV 0.05) of the produced high-purity aluminum or aluminum alloy was measured using a micro Vickers hardness tester as an index of hardness. For the measurement of Vickers hardness, a test piece having a thickness of 0.5 mm was used.

The Vickers hardness is a value measured according to JIS Z 2244:2009 "Vickers hardness test - Test method". A micro Vickers hardness tester of Shimadzu Corporation was used for the measurement.

The Vickers hardness was measured by pressing a square-based pyramid diamond indenter into the surface of the test piece as the high-purity aluminum or aluminum alloy, releasing the test force, and then calculating the diagonal length of the indentation left on the surface.

In the present example, the micro Vickers hardness scale HV 0.05 at a test force of 0.05 kgf (= 0.4903 N) was adopted.

<Composition Analysis of High-Purity Aluminum or Aluminum Alloy>

Using an optical emission spectrometer (model: ARL-4460, manufactured by Thermo Fisher Scientific), Mg, Si, Fe, Cu, Ti, Mn, Ga, Ni, V, Zn, Cr, B, Zr, and Ba in aluminum were quantified. These elements can be more accurately quantified by a glow discharge mass spectrometer. Mg, Si, Fe, Cu, Ti, Mn, Ga, Ni, V, Zn, Cr, B, and Zr are in units of "mass ppm". Ba is in units of "mass%" as a proportion contained in aluminum.

«Example 1»

[Production of Anode]

High-purity aluminum (purity: 99.999 mass% or more) was melted at 750°C to obtain molten aluminum. Next, the molten aluminum was subjected to a vacuum treatment by being held at a temperature of 750°C for 2 hours under the condition of a degree of vacuum of 50 Pa. The molten aluminum after the vacuum treatment was cast in a cast iron mold (22 mm × 150 mm × 200 mm) at 150°C to obtain an ingot.

Rolling was performed under the following conditions. After both surfaces of the ingot were subjected to scalping by 2 mm, cold rolling was performed from a thickness of 18 mm at a working ratio of 99.9%. The thickness of the obtained rolled material was 100 $\mu$m.

A high-purity aluminum foil (thickness 100 $\mu$m) having a purity of 99.999 mass% and a Vickers hardness of 23.0 HV was cut into a disk shape of $\varphi$14 mm to manufacture an anode.

[Counter Electrode Production]

A lithium foil having a purity of 99.9 mass% (thickness 300 $\mu$m: Honjo Chemical) was cut into a disk shape of $\varphi$16 mm to manufacture a counter electrode.

[Production of Electrolytic Solution]

In a mixed solvent prepared by mixing ethylene carbonate (EC) and diethyl carbonate (DEC) at EC:DEC = 30:70 (volume ratio), $LiPF_6$ was dissolved to 1 mol/liter to produce an electrolytic solution.

[Production of Non-Aqueous Electrolyte Secondary Battery]

A polyethylene porous separator was disposed between the anode and the counter electrode and accommodated in a battery case (standard 2032), the above electrolytic solution was injected, and the battery case was sealed, whereby a coin type (half cell) non-aqueous electrolyte secondary battery having a diameter of 20 mm and a thickness of 3.2 mm was produced.

[Charge/Discharge Evaluation: Initial Charge/Discharge]

The separator was sufficiently impregnated with the electrolytic solution by allowing the coin type non-aqueous electrolyte secondary battery to stand at room temperature for 10 hours.

Next, an initial charge/discharge was performed by performing constant current charging (occlusion of Li in Al) to 0.005 V at 0.2 C at room temperature, then performing constant current constant voltage charging for 8 hours for constant voltage charging to 0.005 V, and thereafter performing constant current discharging for discharging (release of Li from Al) to 1.5 V at 0.2 C.

[Charge/Discharge Evaluation: Charge/Discharge Efficiency at Third Cycle]

After the initial charge/discharge, charging at 0.2 C and discharging at 0.2 C were repeated twice (three times in total from the initial charge/discharge) under the same conditions as in the initial charge/discharge.
The charge/discharge was evaluated by three cycle tests, the discharge capacity and the charge capacity at the third cycle were measured, and the discharge capacity retention ratio was calculated by the following formula.

$$\text{Discharge capacity retention ratio (\%) after three cycles} = \text{discharge capacity at}$$

$$\text{third cycle/charge capacity at third cycle x 100}$$

In Example 1, the discharge capacity retention ratio calculated by the above method was 99.5%.

«Example 2»

A coin type (half cell) non-aqueous electrolyte secondary battery was produced as in Example 1 except that an anode used was a high-purity aluminum foil (thickness 100 $\mu$m) having a purity of 99.99 mass% and a Vickers hardness of 23.7 HV, and evaluated.
The coin type (half cell) non-aqueous electrolyte secondary battery was produced as in Example 1 except that high-purity aluminum having a purity of 99.9 mass% was adjusted to be soft and formed into a high-purity aluminum foil (thickness 100 $\mu$m) having a Vickers hardness of 23.7 HV, and evaluated.
In Example 2, the discharge capacity retention ratio calculated by the above method was 98.0%.

«Example 3»

A coin type (half cell) non-aqueous electrolyte secondary battery was produced as in Example 1 except that an anode used was an aluminum foil (thickness 100 $\mu$m) having a purity of 99.98 mass% and a Vickers hardness of 29.4 HV, and evaluated.
In Example 3, the discharge capacity retention ratio calculated by the above method was 97.5%.

«Example 4»

A coin type (half cell) non-aqueous electrolyte secondary battery was produced as in Example 1 except that an anode used was a barium-aluminum alloy foil (thickness 100 $\mu$m) having a Vickers hardness of 32.8 HV and made of 99 parts by mass of high-purity aluminum having a purity of 99.999 mass% and 1 part by mass of barium, and evaluated.
In Example 4, the discharge capacity retention ratio calculated by the above method was 99%.
The barium-aluminum alloy used in Example 4 was manufactured by the following method.
High-purity aluminum (purity: 99.999 mass% or more) was melted at 750°C, and barium manufactured by Kojundo Chemical Laboratory Co., Ltd. (purity: 99 mass%) was inserted into the molten aluminum, whereby a molten Al-Ba alloy in which the amount of barium was 1.0 mass% with respect to the total amount of the aluminum alloy was obtained.
Next, the molten alloy was cleaned by being held at a temperature of 750°C for 2 hours under the condition of a degree of vacuum of 50 Pa.
The cleaned molten alloy was cast in a cast iron mold (22 mm $\times$ 150 mm $\times$ 200 mm) at 150°C to obtain an ingot.
A rolled material having a thickness of 100 $\mu$m was obtained in the same manner as the anode of Example 1.

«Comparative Example 1»

A coin type (half cell) non-aqueous electrolyte secondary battery was produced as in Example 1 except that an anode used was an aluminum foil (thickness 100 $\mu$m) having a purity of 99.85 mass% and a Vickers hardness of 41.1 HV, and evaluated.
In Comparative Example 1, the discharge capacity retention ratio calculated by the above method was 86.5%.

«Comparative Example 2»

A coin type (half cell) non-aqueous electrolyte secondary battery was produced as in Example 1 except that an anode used was an aluminum foil (thickness 100 $\mu$m) having a purity of 99.96 mass% and a Vickers hardness of 40.8 HV, and evaluated.
In Comparative Example 2, the discharge capacity retention ratio calculated by the above method was 94%.

«Comparative Example 3»

A coin type (half cell) non-aqueous electrolyte secondary battery was produced as in Example 1 except that an anode used was an aluminum foil (thickness 100 $\mu$m) having a purity of 99.99 mass% and a Vickers hardness of 37.8 HV, and evaluated.
In Comparative Example 3, the discharge capacity retention ratio calculated by the above method was 94%.
From the results of the half cell test, it was found that the discharge capacity retention ratio was better in the case where the high-purity aluminum or aluminum alloy having a Vickers hardness of 35 HV or less was used as the anode active material than in the case where aluminum harder than 35 HV was used.

«Example 5»

[Production of Anode]

A high-purity aluminum foil (thickness: 100 $\mu$m) having a purity of 99.999 mass% and a Vickers hardness of 23.0 HV was cut into a disk shape of $\varphi$16 mm to manufacture an anode.

[Production of Positive Electrode]

90 parts by mass of a positive electrode active material made of LiCoO$_2$ (CELLSEED manufactured by Nippon Chemical Industrial CO., LTD.) having an average particle size (D50) of 10 $\mu$m, 5 parts by mass of a binder made of polyvinylidene fluoride (PVdF manufactured by Kureha Corporation), and 5 parts by mass of a conductive agent made of acetylene black (DENKA BLACK manufactured by Denka Company Limited) were mixed, and 70 parts by mass of N-methyl-2-pyrrolidone was further mixed to obtain an electrode mixture for the positive electrode.
The electrode mixture of this positive electrode was applied by a doctor blade method onto a current collector made of an aluminum foil having a thickness of 15 $\mu$m, dried at 60°C for 2 hours, further dried at 150°C for 10 hours in a vacuum to volatilize N-methyl-2-pyrrolidone, and thereafter rolled.
The application amount of the positive electrode active material after drying was 21.5 mg/cm$^2$
Next, the above positive electrode was cut into a disk shape of $\varphi$14 mm to manufacture a positive electrode.

[Production of Non-Aqueous Electrolyte Secondary Battery]

A polyethylene porous separator was disposed between the anode and the positive electrode obtained by the above method and accommodated in a battery case, the electrolytic solution was injected, and the battery case was sealed, whereby a coin type (full cell) non-aqueous electrolyte secondary battery having a diameter of 20 mm and a thickness of 3.2 mm was produced.

<<Comparative Example 4>>

[Production of Non-Aqueous Electrolyte Secondary Battery]

A coin type (full cell) non-aqueous electrolyte secondary battery was produced as in Example 5 except that an anode used was an aluminum foil (thickness 100 $\mu$m, A1085) having a purity of 99.85 mass% and a Vickers hardness of 41.1 HV, and evaluated.
As the A1085 aluminum, a commercially available product (manufactured by Mitsubishi Aluminum Co., Ltd.) was purchased and used as it was.

[Charge/Discharge Evaluation]

The electrodes and separator were sufficiently impregnated with the electrolytic solution by allowing the coin type (full cell) non-aqueous electrolyte secondary battery of Example 5 or Comparative Example 4 to stand at room temperature for 10 hours.

Next, an initial charge/discharge was performed by performing constant current charging to 4.2 V at 0.2 C at room temperature, then performing constant current constant voltage charging for 8 hours for constant voltage charging to 4.2 V, and thereafter performing constant current discharging for discharging to 2.75 V at 0.2 C.

[Cycle Characteristic Test]

After the initial charge/discharge, charging at 0.2 C and discharging at 0.2 C were repeated nine times (ten times in total including the initial charge/discharge) under the same conditions as in the initial charge/discharge.

The life was evaluated by nine cycle tests, the cycle capacity retention ratio after nine cycles was calculated from the discharge capacity at the ninth cycle and the discharge capacity at the first cycle.

$$\text{Cycle capacity retention ratio (\%) after nine cycles} = \text{discharge capacity at ninth}$$

$$\text{cycle/discharge capacity at first cycle} \times 100$$

[Evaluation Results]

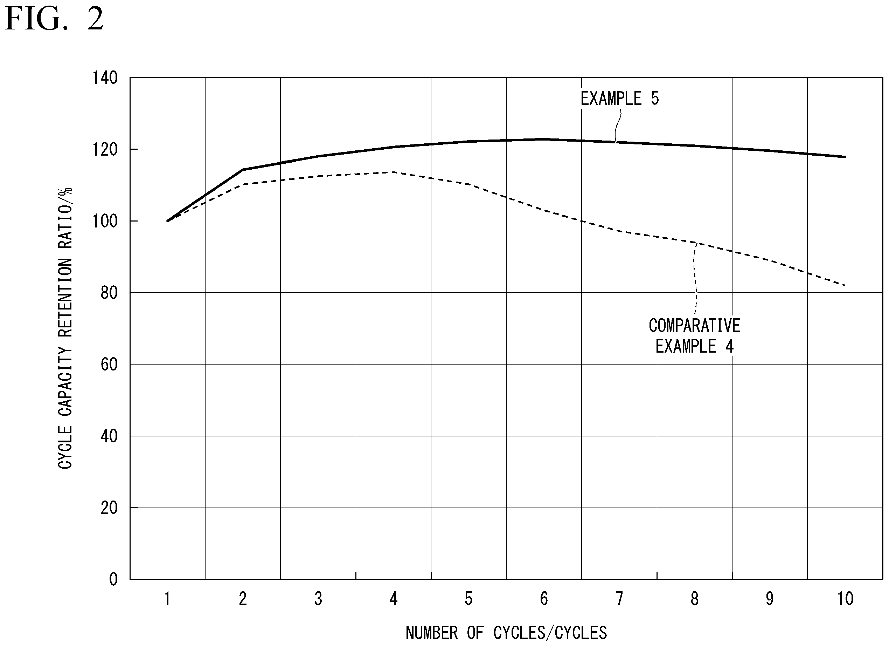

The results of the cycle characteristic test of the full cell are shown in Fig. 2 and Table 1B.

From the results, it was found that the discharge capacity retention ratio was better in the case where the high-purity aluminum foil having a hardness of 23 HV was used as the anode active material than in the case where the aluminum foil having a hardness of 41.1 HV was used as the anode.

In Table 1A below, the aluminum purity (mass%, described as "%" in the table), Vickers hardness (HV), and discharge capacity retention ratio (%) of Examples 1 to 4 and Comparative Examples 1 to 3 are described. In Table 1B below, the aluminum purity (mass%, described as "%" in the table), Vickers hardness (HV), and cycle capacity retention ratio (%) of Example 5 and Comparative Example 4 are described. In Table 1A below, "Aluminum purity" in Example 4 is the aluminum purity of the high-purity aluminum used when the barium-aluminum alloy foil was manufactured.

[Table 1A]

|  | Aluminum purity (%) | Vickers hardness (HV) | Discharge capacity retention ratio (%) |
|---|---|---|---|
| Example 1 | 99.999 | 23.0 | 99.5 |
| Example 2 | 99.99 | 23.7 | 98.0 |
| Example 3 | 99.98 | 29.4 | 97.5 |
| Example 4 | 99.999 | 32.8 | 99.0 |
| Comparative Example 1 | 99.85 | 41.1 | 86.5 |
| Comparative Example 2 | 99.96 | 40.8 | 94.0 |
| Comparative Example 3 | 99.99 | 37.8 | 94.0 |

[Table 1B]

|  | Aluminum purity (%) | Vickers hardness (HV) | Cycle capacity retention ratio (%) |
|---|---|---|---|
| Example 5 | 99.999 | 23.0 | 119 |
| Comparative Example 4 | 99.85 | 41.1 | 84 |

Table 2 below shows the results of component analysis of the high-purity aluminum or aluminum alloy used in each of Examples 1 to 5 and Comparative Examples 1 to 4. From the results shown in Table 1A, Table 1B, and Table 2, it was found that the anode active material in which the total content rate of iron and copper contained in the high-purity aluminum was low had a high discharge capacity retention ratio.

[Table 2]

| | Composition analysis value (ppm) | | | | | | | | | | | | | |
|---|---|---|---|---|---|---|---|---|---|---|---|---|---|---|
| | Si | Fe | Cu | Ti | Mn | Mg | Ga | Ni | V | Zn | Cr | B | Zr | Ba |
| Example 1 Example 5 | 2.2 | 0.8 | 1.8 | ≤0.2 | ≤0.1 | 0.4 | ≤0.5 | ≤0.3 | ≤0.2 | ≤1 | ≤0.3 | ≤0.5 | - | - |
| Example 2 | 8 | 6 | 59 | - | - | 1 | - | - | - | - | - | - | - | - |
| Comparative Example 1 | 430 | 750 | ≤10 | 50 | ≤10 | ≤10 | 120 | 50 | 70 | 20 | - | - | - | - |
| Comparative Example 3 | 10 | 3 | 11 | ≤0.1 | 0.2 | ≤0.1 | 0.5 | ≤0.2 | ≤0.1 | ≤1 | ≤0.3 | ≤0.3 | ≤1.0 | - |
| Example 3 | 25 | 12 | ≤1 | 0.6 | 1.9 | ≤0.1 | 12 | ≤0.2 | 2.1 | 6 | 2.1 | 2.7 | 1.1 | - |
| Comparative Example 2 | 130 | 250 | ≤10 | ≤10 | ≤10 | ≤10 | 40 | ≤10 | ≤10 | ≤10 | ≤10 | 20 | ≤10 | - |
| Example 4 | 2.6 | 1.8 | 1.2 | 0.3 | 1.2 | 0.3 | 0.5 | ≤0.2 | 0.6 | ≤1 | 0.4 | ≤0.3 | ≤1 | 0.96% |
| Comparative Example 4 | 350 | 710 | 6 | 44 | 11 | 5 | 110 | 27 | 53 | 39 | 6 | ≤1 | 9 | - |

[Reference Signs List]

| | |
|---|---|
| 1 | Separator |
| 2 | Positive electrode |
| 3 | Anode |
| 4 | Electrode group |
| 5 | Battery can |
| 6 | Electrolytic solution |
| 7 | Top insulator |
| 8 | Sealing body |
| 10 | Lithium secondary battery |
| 21 | Positive electrode lead |
| 31 | Anode lead |
| 40 | Coin battery |
| 41 | Positive electrode |
| 42 | Anode |
| 43 | Separator |
| 44 | Gasket |
| 45 | Positive electrode can |
| 46 | Anode can |
| 47 | Current collector |
| 48 | Electrolytic solution |

**Claims**

1. Anode active material for a non-aqueous electrolyte secondary battery, the anode active material comprising:

   high-purity aluminum having a purity of 99.9 mass% or more or an alloy thereof,
   in which a Vickers hardness is 35 HV or less.

2. Anode active material for a non-aqueous electrolyte secondary battery according to claim 1,
   in which a total content of iron and copper contained in the high-purity aluminum is 300 mass ppm or less with respect to a total mass of the high-purity aluminum.

3. Anode active material for a non-aqueous electrolyte secondary battery according to claim 1 or 2, further comprising:
   0.1 mass% or more and 1.5 mass% or less of an alkaline earth metal with respect to a total amount of the aluminum alloy.

4. Anode active material for a non-aqueous electrolyte secondary battery according to claim 3,
   in which the alkaline earth metal is one or more alkaline earth metals selected from the group consisting of calcium, strontium, barium, and radium.

5. Anode active material for a non-aqueous electrolyte secondary battery according to claim 3 or 4,
   in which a total content of a metal component excluding the high-purity aluminum and the alkaline earth metal is 0.1 mass% or less with respect to the total amount of the aluminum alloy.

6. Anode active material for a non-aqueous electrolyte secondary battery according to any one of claims 1 to 5,
   in which the high-purity aluminum is a high-purity aluminum foil, and the aluminum alloy is an aluminum alloy foil.

7. Anode active material for a non-aqueous electrolyte secondary battery according to claim 6,
   in which the high-purity aluminum foil or the aluminum alloy foil has a thickness of 5 $\mu$m or more and 200 $\mu$m or less.

8. Anode active material for a non-aqueous electrolyte secondary battery according to any one of claims 1 to 5,
   in which the high-purity aluminum or the aluminum alloy is a powder having an average particle size of 1 $\mu$m or more and 20 $\mu$m or less.

9. Anode active material for a non-aqueous electrolyte secondary battery according to any one of claims 1 to 5, in which the high-purity aluminum or the aluminum alloy is a non-woven fabric made of aluminum fibers.

10. An anode comprising:
    anode active material for a non-aqueous electrolyte secondary battery according to any one of claims 1 to 9.

11. A battery comprising:
    anode according to claim 10.

FIG. 1A

FIG. 1B

FIG. 2

FIG. 3

## INTERNATIONAL SEARCH REPORT

| | International application No. |
|---|---|
| | PCT/JP2018/043160 |

**A. CLASSIFICATION OF SUBJECT MATTER**
Int.Cl. H01M4/46(2006.01)i, H01M4/38(2006.01)i, H01M10/0566(2010.01)i

According to International Patent Classification (IPC) or to both national classification and IPC

**B. FIELDS SEARCHED**

Minimum documentation searched (classification system followed by classification symbols)
Int.Cl. H01M4/46, H01M4/38, H01M10/0566

Documentation searched other than minimum documentation to the extent that such documents are included in the fields searched
Published examined utility model applications of Japan    1922–1996
Published unexamined utility model applications of Japan    1971–2019
Registered utility model specifications of Japan    1996–2019
Published registered utility model applications of Japan    1994–2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-195028 A (HITACHI MAXELL LTD.) 26 October 2017, claims, comparative examples, paragraph [0041], etc. (Family: none) | 1, 6–7, 10–11 |
| X<br>Y | JP 04-206262 A (SEIKO INSTR INC.) 28 July 1992, claims, examples, table 3, page 1, right column, etc. (Family: none) | 1, 10–11<br>2–5, 8–9 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>05.02.2019 | Date of mailing of the international search report<br>12.02.2019 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2018/043160 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | WO 2011/105301 A1 (SUMITOMO CHEMICAL CO., LTD.) 01 September 2011, claims, examples, tables, etc. & US 2012/0328963 A1, claims, examples, tables & EP 2541670 A1 & CN 102771005 A & KR 10-2013-0009785 A | 2-5 |
| Y | JP 63-096869 A (SHOWA ALUMINUM CORPORATION) 27 April 1988, claims, examples, etc. (Family: none) | 4 |
| Y | JP 2000-223117 A (SANYO ELECTRIC CO., LTD.) 11 August 2000, claims, examples, etc. & US 6436572 B1, claims, examples | 8 |
| Y | JP 59-148277 A (SANYO ELECTRIC CO., LTD.) 24 August 1984, claims, examples, etc. (Family: none) | 9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018009676 A
- JP HEI7320723 B
- JP HEI9320634 B